# EUROPÄISCHE PATENTANMELDUNG

(11) **EP 3 650 098 A2**
(43) Veröffentlichungstag der Anmeldung: **13.05.2020**
(21) Anmeldenummer: 19202167.3
(22) Anmeldetag: 09.10.2019
(51) Int. Cl.: B01D 25/164, B01D 25/28, B01D 25/30

(54) **VERFAHREN ZUM BEFÜLLEN VON PLATTENFILTERN**

(30) Priorität: 09.11.2018 DE 102018219126
(71) Anmelder: Krones AG, 93073 Neutraubling (DE)
(72) Erfinder: Mueller-Auffermann, Konrad, 93073 Neutraubling (DE); Scheidel, Alexander, 93073 Neutraubling (DE)
(74) Vertreter: Grünecker Patent- und Rechtsanwälte PartG mbB

(57) **Zusammenfassung**

Die Erfindung betrifft ein Verfahren zum Befüllen eines Plattenfilters, so wie einer Membran für die Bierherstellung mit mehreren in Längsrichtung L nebeneinander angeordneten Filterkammern mit jeweiligen Unfiltraträumen, die an zumindest einer Seite von einer flexiblen, aufblasbaren Membran begrenzt werden, wobei während der Befüllung des Unfiltratraums die mindestens eine Membran derart bewegt wird, dass sich das Volumen des Unfiltratraums bei der Befüllung vergrößert.

## Beschreibung

Die Erfindung betrifft ein Verfahren zum Befüllen von Plattenfiltern, sowie eine Membran für einen Plattenfilter gemäß den Oberbegriffen der Ansprüche 1, 8 und 14.

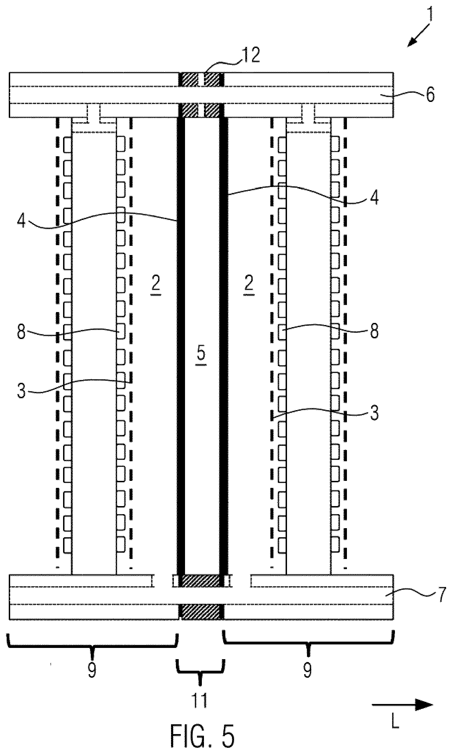

Figur 5 zeigt ein Beispiel für eine Filterkammer eines Plattenfilters. Ein Plattenfilter kann mehrere nebeneinander angeordnete Platten, hier zum Beispiel Filterplatten 9 und Membranplatten 11 aufweisen, die in herkömmlicher Weise dicht miteinander über Kopf und Endplatten verpresst und verbunden sind. Figur 5 ist nur ein Beispiel für einen entsprechenden Aufbau.

Der Plattenfilter weist dabei in Längsrichtung L mehrere nebeneinander angeordnete Filterkammern 1 auf, die jeweils einen Unfiltratraum 2 aufweisen, der von einer Membran 4 zu einer Seite begrenzt wird und zur anderen von einem Filterelement 3, zum Beispiel einem Filtertuch, das über einer strukturierten Oberfläche 8 angeordnet ist, derart, dass das über einen Befüllkanal 7 eingeleitete Unfiltrat von dem Filterelement 3 gefiltert werden kann und über einen Filtratablauf 6 abgeleitet werden kann. Um den Filterkuchen zu verpressen, kann ein Aufblasraum 5 vorgesehen sein, in den ein Aufblasmedium über einen Ein- bzw. Auslass 12 ein oder ausgeleitet werden kann, um die Membran zu bewegen. In Figur 5 sind 2 nebeneinander angeordnete Filterkammern 1 gezeigt.

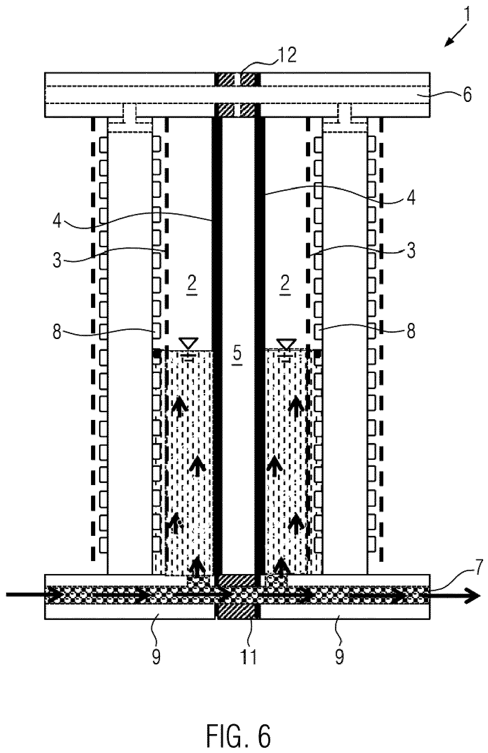

Bei der herkömmlichen Maischefiltration zur Bierherstellung ist eine der größten Herausforderungen, dass der Kuchenaufbau innerhalb der Unfiltraträume der einzelnen Filterkammern homogen erfolgt, um so eine gleichmäßige Verpressung, Filtration und spätere Auswaschung der Treber beim Anschwänzen zu gewährleisten. Da die Maische jedoch aus verschiedenartig großen und unterschiedlich dichten Partikeln besteht, kann es zu partiellen Sedimentationen innerhalb der Kammern kommen, weshalb die Befüllung der leeren Kammern oft sehr schnell und bevorzugt von unten nach oben erfolgt, wie in Figur 6 dargestellt ist.

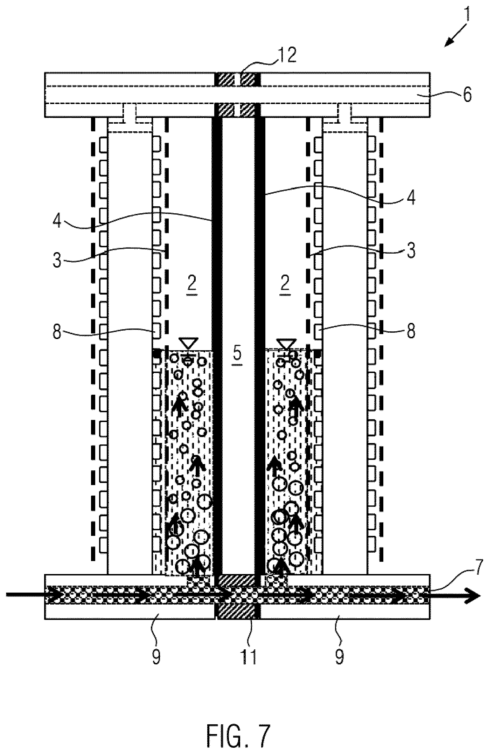

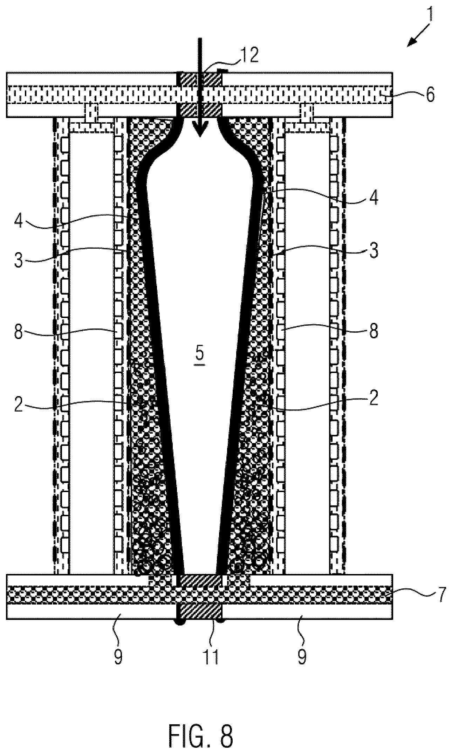

Finden dennoch Sedimentationen z.B. aufgrund von Rohstoffveränderungen oder Betriebsstörungen und/oder einer zu geringen Befüllgeschwindigkeit statt, so resultiert ein inhomogener Filterkuchen, der zu einer verschlechterten Ausbeute führt, wie es beispielsweise in Figuren 7 und 8 dargestellt wird. Das bedeutet, dass durch den inhomogenen Filterkuchen sich beim Verpressen im unteren Bereich eine größere Dicke ergibt, so wie ein größerer Filterkuchenwiderstand.

Die herkömmliche schnelle und gleichzeitige Befüllung aller Kammern über die Maischefilterlänge L hat außerdem den Nachteil, dass leistungsstarke Maischepumpen verwendet werden müssen und dass durch die hohe Einströmgeschwindigkeit das Risiko besteht, dass sich unterschiedlich große Maischemengen/Volumina in den einzelnen Kammern einlagern, was wiederum zu unterschiedlichen Verhältnissen im Filter und somit unbefriedigenden Resultaten (Ausbeuten, Filtrationsergebnissen etc.) führt.

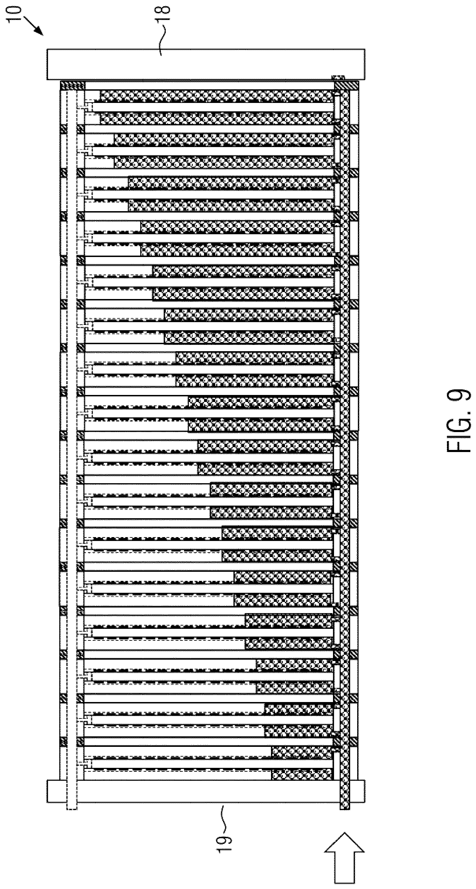

Figur 9 illustriert, dass bei einer schnellen einseitigen Befüllung oftmals mehr Maische in den hinteren Teilen des Maischefilters eingelagert wird.

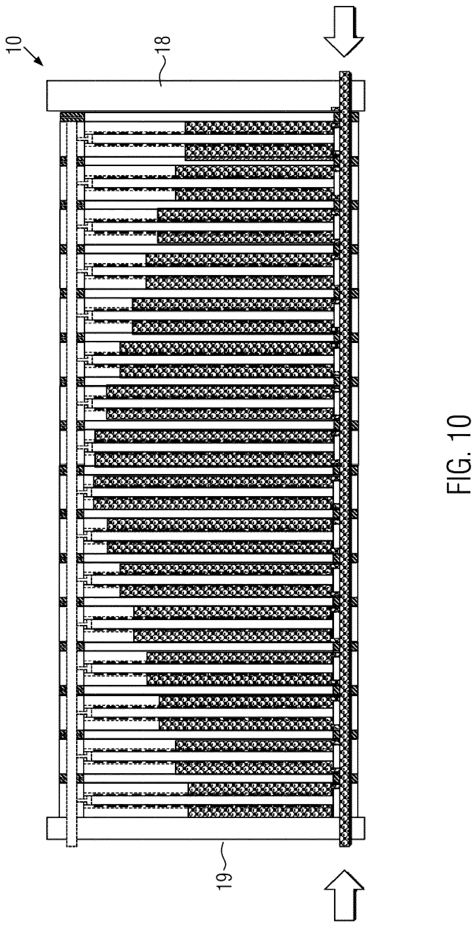

In der Praxis begegnet man dieser Problematik teilweise durch eine beidseitige Befüllung des Filters, wie beispielsweise in Figur 10 dargestellt ist, was jedoch nur zu einer Verschiebung des Füllvolumens zur Mitte hin, nicht jedoch zu einer vollständigen Eliminierung der ungleichmäßigen Filterkammerbefüllung beiträgt.

Ein weiteres Problem klassischer Maischefilter besteht darin, dass die Filterkammern bzw. die Größe der Unfiltraträume statisch für bestimmte Filtrationsvolumina, bzw. Feststoffvolumina konzipiert werden. Bei einer zu geringen Befüllmenge, wird der Filterkuchen in den Kammern zu dünn, wodurch der Kuchenaufbau erschwert und die Filtration (Klärschärfe) negativ beeinflusst wird.

Bei der Einlagerung von zu großen Mengen hingegen, wird die Auslaugung durch den dickeren Filterkuchen erschwert und die Wassereinlagerung nach der Kompression behindert.

Hiervon ausgehend liegt der vorliegenden Erfindung die Aufgabe zugrunde ein Verfahren zur Befüllung von Plattenfiltern, sowie eine Membran bereitzustellen, die ermöglichen, dass auf einfache Art und Weise Unfiltrat homogen in einen Unfiltratraum eingelagert werden kann.

Erfindungsgemäß wird diese Aufgabe durch die Merkmale der Ansprüche 1, 8 und 14 gelöst.

Bei dem erfindungsgemäßen Verfahren zur Befüllung von Plattenfiltern, insbesondere Maischefiltern für die Bierherstellung ist vorgesehen, dass während der Befüllung des Unfiltratraums die mindestens eine Membran derart bewegt wird, dass sich das Volumen des Unfiltratraums bei der Befüllung vergrößert. Das Volumen vergrößert sich also bei der Befüllung zumindest zeitweise oder während der gesamten Befüllung.

Dadurch, dass sich das Filterkammervolumen bei der Befüllung vergrößert, kann ein homogener Aufbau des Filterkuchens begünstigt und das Volumen des Unfiltratraums bedarfsorientiert angepasst werden. Damit das Unfiltrat in den Unfiltraträumen, deren Volumen durch Expansion der Membran anfänglich verringert wurde, adäquat eingelagert werden kann, muss also bei der Befüllung eine zumindest teilweise Relaxation der Membranen erfolgen.

Vor oder am Anfang der Befüllung kann die jeweilige Membran aufgeblasen werden, sodass sie sich in den Unfiltratraum hinein erstreckt. Dadurch, dass das Volumen des Unfiltratraums verkleinert wird, ergibt sich eine erhöhte Befüllgeschwingigkeit in den einzelnen Unfiltraträumen. Dies reduziert wirksam eine mögliche Sedimentation und begünstigt somit die gleichmäßige Einlagerung. Damit dennoch ein gewünschtes Volumen an Unfiltrat eingelagert werden kann, bewegt sich dann die Membran zurück, derart, dass sich das Volumen im Unfiltratraum vergrößern kann.

Es ist vorteilhaf,t wenn bereits vor dem Einleiten des Unfiltrats in den Unfiltratraum die Membran aufgeblasen wird. Entsprechendes kann aber auch noch am Anfang der Befüllung (z.B. bevor 40% des Volumens des Unfiltratraums befüllt wurden) erfolge. Danach kann dann die Membran bedarfsgerecht zurückbewegt werden.

Die Membran wird aufgeblasen, indem ein Aufblasmedium in einen Aufblasraum geleitet wird, wobei während der Befüllung das Aufblasmedium zumindest teilweise aus dem Aufblasraum abgeleitet wird.

Durch Ableiten des Aufblasmediums wird der Druck im Aufblasraum reduziert und die Membran kann sich zurück bewegen, um das Volumen des Unfiltratraums zu vergrößern. Es ist ganz besonders vorteilhaft, wenn so viel Aufblasmedium abgelassen wird, dass der Druck im Unfiltratraum im Wesentlichen konstant bleibt, wenn Unfiltrat einströmt, wobei hier im Wesentlichen konstant bedeutet +/- 0,01-0,3 bar bzw. +/- 1-30%.

Es ist vorteilhaft, wenn, bevor die Membran zurück zur Vergrößerung des Volumens des Unfiltratraums bewegt wird, das Volumen des Unfiltratraums um mindestens 30 Prozent verkleinert wurde, im Vergleich zu einem Zustand, bei dem im Aufblasraum und im Unfiltratraum Normaldruck herrscht, derart, dass sich die Einströmgeschwindigkeit des Unfiltrats im Vergleich zu einer unaufgeblasenen Membran im Unfiltratraum erhöht.

Weiter ist es möglich, dass das Füllvolumen im Unfiltratraum gezielt eingestellt werden kann, indem die Membran in den Unfiltratraum hinein, oder aus dem Unfiltratraum hinaus bewegt wird. Möchte man beispielsweise für einen bestimmten Filterprozess oder ein bestimmtes Filtermedium das Volumen des Unfiltratraums verkleinern, so wird der Druck im Aufblasraum nur soweit reduziert, dass das Volumen ein vorbestimmtes Volumen nicht überschreitet.

Möchte man aber das Volumen im Unfiltratraum vergrößern, so kann der Druck im Aufblasraum soweit reduziert werden, bis das gewünschte Volumen erreicht ist. Es ist sogar möglich einen Unterdruck im Aufblasraum anzulegen, so dass das Volumen des Unfiltratraums maximal vergrößert wird.

Nach der vollständigen Befüllung des Unfiltratraums kann vorzugsweise die mindestens eine aufblasbare Membran erneut aufgeblasen und das Unfiltrat verpresst werden, wobei anschließend bevorzugt Wasser zur Auslaugung des Filterkuchens im Unfiltratraum eingeleitet wird.

Vorteilhafterweise übersteigt der Druck im Aufblasraum während der Befüllung nicht den Druck im Aufblasraum beim Verpressen, um den Widerstand und somit den Druckverlust des Filtratstroms nicht stark zu erhöhen.

Der erfindungsgemäße Plattenfilter umfasst mehrere in Längsrichtung L nebeneinander angeordnete Filterkammern mit jeweiligen Unfiltraträumen, die an zumindest einer Seite von einer flexiblen, aufblasbaren Membran begrenzt werden. Die Vorrichtung weist weiter eine Steuereinrichtung auf, die während der Befüllung des Unfiltratraums den Druck in einem Aufblasraum derart einstellt, dass sich das Volumen des Unfiltratraums bei der Befüllung zumindest zeitweise vergrößert. Zumindest zeitweise bedeutet hier, dass erst nach einer bestimmten Zeit nach dem Start der Befüllung die Membran zurück bewegt wird oder die Membran bei einem bestimmten maximalen Volumen des Unfiltratraums nicht weiter zurückbewegt wird, aber trotzdem noch weiter befüllt wird. Die Steuereinrichtung kann dann mindestens ein entsprechendes Stellglied, wie beispielsweise eine Pumpe und/oder ein Ein- und/oder Auslassventil ansteuern, um einen bestimmten Druck im Aufblasraum einzustellen.

Dazu kann eine Eingabeeinrichtung vorgesehen sein, über die das Druckprofil in dem Aufblasraum während des Befüllens, insbesondere vor, während und nach dem Befüllen eingegeben oder ausgewählt werden kann, oder in die Parameter eingegeben werden können auf deren Grundlage ein entsprechendes Profil ermittelt und eingestellt wird.

Gemäß einer bevorzugten Ausführungsform ist die aufblasbare Membran derart ausgebildet, dass sie einen äußeren Bereich aufweist, der einen inneren Bereich umgibt, wobei der äußere Bereich beim Aufblasen einen kleineren Biegeradius bzw. Krümmungsradius aufweist, als der innere Bereich, d.h. zum Beispiel, dass der äußere Bereich elastischer ist als der innere Bereich.

Der innere Bereich weist vorteilhafterweise eine größere Härte auf, als der äußere Bereich, zumindest an den Stellen die verspannt sind. Der innere Abschnitt muss nicht homogen ausgebildet sein und kann Abschnitte unterschiedlicher Elastizität aufweisen.

Ein unterschiedlicher Biegeradius kann wahlweise durch unterschiedliche Materialien und/oder durch unterschiedliche Materialstärken realisiert werden.

Somit kann bei Erhöhung des Drucks im Aufblasraum sich die Membran nach außen also in Richtung Mitte des Unfiltratraums bewegen, wobei sich die Membran nicht, wie im Stand der Technik, im Wesentlichen konvex nach außen wölbt, sondern der innere Bereich eine Kompressionsfläche darstellt, die einen größeren Biegeradius aufweist. Somit weist der Unfiltratraum im aufgeblasenen Zustand der Membran im Bereich des inneren Bereichs der Membran eine im Wesentlichen konstante Breite auf. Dadurch ist es möglich den Filterkuchen homogener einzulagern und auch homogener zu verpressen. Der innere Bereich ist vorteilhafterweise mindestens so groß, dass er im Wesentlichen die gesamte freie Filterfläche (+- 10%) abdeckt, damit diese gleichmäßig komprimiert werden kann. Unter freie Filterfläche versteht man die Fläche, die aktiv zum Filtern verwendet, nicht z.B. die Fläche eines Filterelements, die zur Befestigung in einen Ramen geklemmt ist. Es ist vorteilhaft, wenn die Fläche des äußeren Bereichs 10 bis 30 Prozent der Fläche des inneren Bereichs entspricht. Die Membran kann dann mit dem weicheren Bereich an einer Filterplatte befestigt werden, insbesondere in einen Rahmen eigespannt werden, wobei ein freier Deformationsbereich des äußeren Bereichs für die reversible Deformation beim Aufblasen der Membranen bleibt.

Der äußere Bereich ist dabei vorteilhafterweise ein geschlossener, im Wesentlichen ringförmiger, umlaufender Bereich mit vorteilhafterweise einer im Wesentlichen vierseitigen inneren Kontur.

Die Erfindung betrifft auch eine Membran, die entsprechend, wie vorab beschrieben ausgebildet ist.

Um eine gleichmäßige Einlagerung des zu filtrierenden Gemischs in allen Kammern des Filters zu gewährleisten kann ein gemeinsamer Gegendruck, idealerweise ein Überdruck von z.B. 0,1 bis 1bar in der oder den Filtratablaufleitungen eingestellt werden. Dies kann z.B. über eine Spunddruckregulierung eines Ausgleichsbehälters einfach reguliert werden.

Die Erfindung wird nachfolgend unter Bezugnahme der folgenden Figuren näher erläutert.
- Figur 1: zeigt grobschematisch einen Teilschnitt eines erfindungsgemäßen Plattenfilters während des Befüllens.
- Figur 2: zeigt den in Figur 1 gezeigten Plattenfilter am Ende des Befüllens, bei einer sehr hohen Befüllmenge.
- Figur 3: zeigt einen Schnitt durch einen Plattenfilter gemäß der vorliegenden Erfindung während des Befüllens.
- Figur 4: zeigt eine Draufsicht auf eine erfindungsgemäße Membran, sowie einen Schnitt durch die Membran in einem aufgeblasenen und unaufgeblasenen Zustand.
- Figur 5: zeigt einen Plattenfilter mit unaufgeblasenen Membranen.
- Figur 6: zeigt ein herkömmliches Befüllen des in Figur 5 gezeigten Plattenfilters.
- Figur 7: zeigt eine Sedimentation der Unfiltratpartikel während der Befüllung.
- Figur 8: zeigt einen ungleichmäßigen Filterkuchen beim Verpressen des Filterkuchens.
- Figur 9: zeigt eine ungleichmäßige Beladung der Unfiltraträume bei Befüllung von einer Seite.
- Figur 10: zeigt eine ungleichmäßige Beladung der Unfiltraträume bei Befüllung von zwei Seiten.
- Figur 11: zeigt eine Draufsicht auf eine herkömmliche Membran, sowie einen Schnitt durch die Membran in einem aufgeblasenen und unaufgeblasenen Zustand.
- Figur 12: zeigt eine Steuerung zum Einstellen des Drucks im Aufblasraum gemäß der vorliegenden Erfindung.

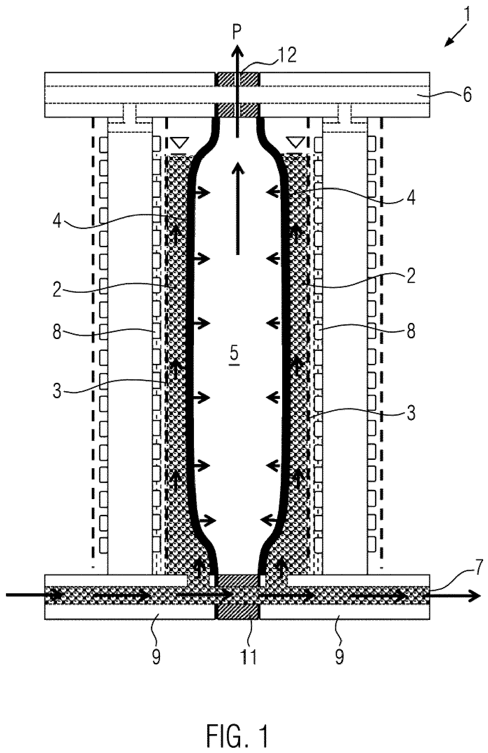

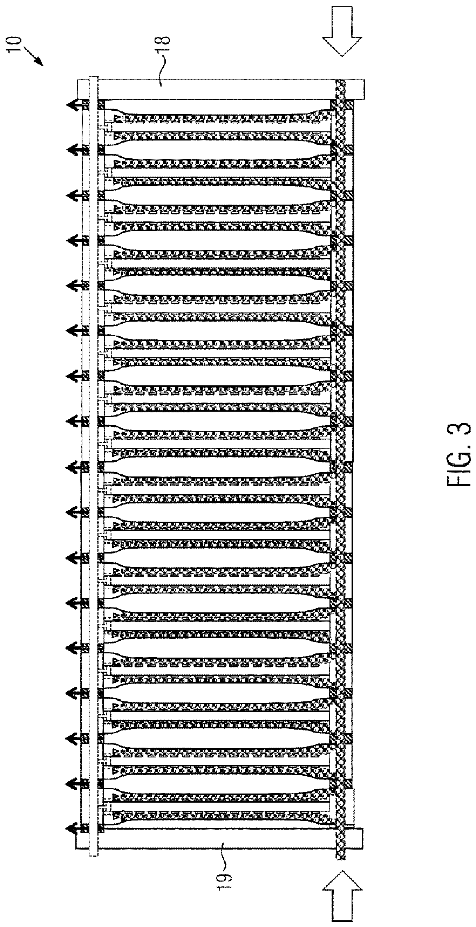

Figur 1 zeigt ein Ausführungsbeispiel einer Filterkammer 1 eines Plattenfilters 10, wie beispielsweise in Figur 3 dargestellt ist. Ein Plattenfilter 10 kann mehrere nebeneinander angeordnete Platten, hier zum Beispiel Filterplatten 9 und Membranplatten 11 aufweisen, die in herkömmlicher Weise dicht miteinander über Kopf und Endplatten 18, 19 (siehe Figur 3) verpresst und verbunden sind. Figur 1 ist nur ein Beispiel für einen entsprechenden Aufbau. An den Filterplatten 9 kann mindestens ein Filterelement 3 und an den Membranplatten 11 zumindest eine aufblasbare Membran 4 angeordnet sein.

Der Plattenfilter 10 weist dabei in Längsrichtung L mehrere nebeneinander angeordnete Filterkammern 1 auf, die jeweils einen Unfiltratraum 2 aufweisen, der von einer Membran 4 zu einer Seite begrenzt wird, und zur anderen Seite von einem Filterelement 3, zum Beispiel einem Filtertuch, dass über einer strukturierten Oberfläche 8 angeordnet ist, derart, dass das über einen Befüllkanal 7 eingeleitete Unfiltrat von dem Filterelement 3 gefiltert werden kann und über einen Filtratablauf 6 abgeleitet werden kann. Um z.B. den Filterkuchen zu verpressen kann ein Aufblasraum 5 vorgesehen sein, in den Aufblasmedium über einen Ein- bzw. Auslass 12 ein- oder ausgeleitet werden kann, um die Membran 4 zu bewegen. In Figur 1 sind zwei nebeneinander angeordnete Filterkammern 1 gezeigt, wobei sich zwei nebeneinanderliegende Membranen 4 zweier Filterkammern 1 einen Aufblasraum 5 teilen. Bei Erhöhung des Drucks im Aufblasraum 5 bewegen sich dann beide Membranen 4 nach außen.

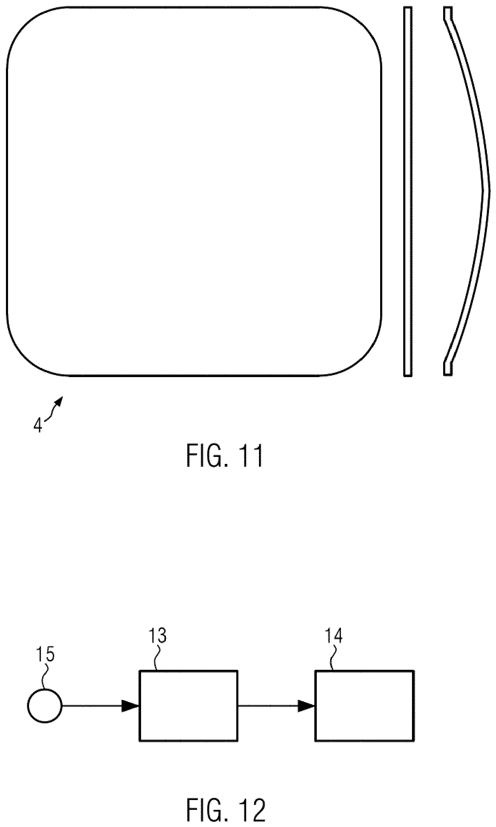

Gemäß der vorliegenden Erfindung weist der Plattenfilter 10, wie in Figur 12 dargestellt ist, vorteilhafterweise eine Steuereinrichtung 13 auf, über die mindestens ein Stellglied 14 zum Einstellen eines vorbestimmten Drucks im Aufblasraum 5 vorgesehen ist. Ein entsprechendes Stellglied kann beispielsweise eine Pumpe und/oder ein Einlass- und/oder Auslassventil

Dazu kann eine Eingabeeinrichtung 15 vorgesehen sein, über die das Druckprofil in dem Aufblasraum 5 während des Befüllens, insbesondere vor, während und nach dem Befüllen eingegeben, oder ausgewählt werden kann, oder über die Parameter eingegeben werden können auf deren Grundlage ein entsprechendes Druckprofil ermittelt wird- z.B. Art-Beschaffenheit und Menge des Unfiltrats, Befüllgeschwindigkeit etc. Es ist auch möglich, dass mindestens ein Druckprofil bereits werksseitig abgespeichert und/oder nicht auswählbar ist. Insbesondere kann über die Steuereinrichtung der Druck in dem Aufblasraum 5, derart eingestellt werden, dass während der Befüllung des Unfiltratraums 2 mit Unfiltrat die mindestens eine Membran 4 derart bewegt wird, dass sich das Volumen des Unfiltratraums 2 bei der Befüllung verändert.

Figur 11 zeigt eine Draufsicht auf eine herkömmliche elastische aufblasbare Membran. Ferner ist ein Längsschnitt durch die Membran in aufgeblasenem und unaufgeblasenem Zustand gezeigt. Wie der Figur 11 zu entnehmen ist, ergibt sich eine konvexe Wölbung, so dass, wenn die Membran 4 aufgeblasen wird und sich in einer Richtung vom Aufblasraum 5 betrachtet nach bewegt, der Unfiltratraum 2 keine konstante Breite aufweist. Darüber hinaus ergibt sich beim Verpressen des Filterkuchens der Nachteil, dass der Filterkuchen in der Mitte stärker verpresst wird, als an den Rändern. Diese inhomogene Kompression führt zu unterschiedlichen Filterkuchenwiderständen innerhalb des Filterkuchens, der dadurch ungleichmäßig mit Waschflüssigkeit ausgelaugt wird.

Die Membranen können entweder an entsprechenden Platten eingespannt werden, oder mit entsprechenden Platten verschweißt werden.

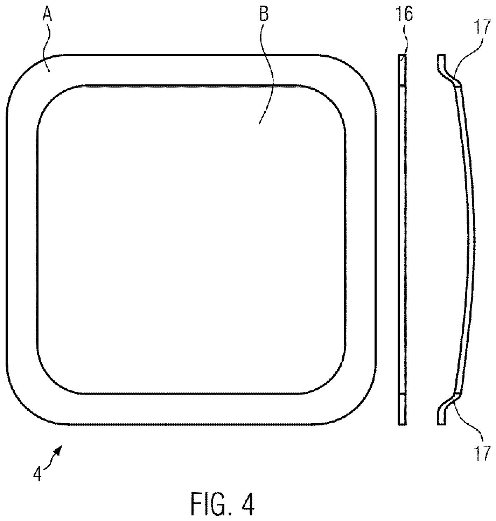

Gemäß einer bevorzugten Ausführungsform ist die Membran 4, wie aus Figur 4 hervorgeht in mindestens zwei unterschiedliche Bereiche A, B eingeteilt, die stoffschlüssig miteinander verbunden sind. Der äußere flexiblere Bereich A ist dabei etwa so groß, dass die Membran 4 z.B. an einer rahmenartigen Platte befestigt werden kann oder zwischen zwei benachbarten rahmenartigen Platten eingespannt werden kann und so die benachbarten Platten gegeneinander abdichten kann. Wie der Schnitt durch die Membran 4 zeigt, ergibt sich dabei eine umlaufende Dichtfläche 16. Zusätzlich verbleibt ein umlaufender Deformationsbereich 17 des äußeren Bereichs A, der sich beim Aufblasen der Membranen 4 nach außen, vom Aufblasraum 5 wegstülpt. Der innere weniger flexible Bereich B weist beim Aufblasen einen größeren Biegeradius auf und bleibt im Wesentlichen gerade bzw. weist einen kleineren Biegeradius auf.Es können auch mehrere Bereiche (>2) vorgesehen sein, die unterschiedlich dehnbar sind.

Somit können die Nachteile der stark konvexen Wölbung, wie sie zuvor beschrieben wurden, vermieden werden.

Dabei kann beispielsweise der äußere Bereich A eine Shore-Härte von 40 bis 70 ShA (nach DIN EN ISO 868, DIN ISO 7619-1 und ASTM D2240-00) aufweisen und der innere härtere Bereich B eine Shore-Härte von 60 bis 80 ShA, bzw. 40 bis 90 ShD Vorteilhafterweise sollte die Differenz der Härten beider Bereiche mindestens 5 ShA, vorzugsweise mindestens 10 ShA aufweisen.

Aber auch über die Dicke der Membran 4 kann ein unterschiedlicher Biegeradius beim Aufblasen erzielt werden, indem beispielsweise der innere Bereich B wesentlich dicker ist, als der umlaufende äußere Bereich A. Der äußere Bereich A ist dabei wie aus der Figur 4 hervorgeht insbesondere ringförmig mit vierseitiger Innenkontur vorzugsweise mit abgerundeten Ecken ausgebildet.

Als Material für die Membran können vorzugsweise EPDM, NBR, PP und PA sowie Verbundwerkstoffe aus diesen eingesetzt werden.

Gemäß diesem Ausführungsbeispiel ist es möglich den Filterkuchen homogener einzulagern und homogener zu verpressen. Eine gleichmäßige Kompression des Filterkuchens über die gesamte Filterfläche ermöglicht es den Filterkuchen homogen auszulaugen und erhöht dadurch die Effizienz des Plattenfilters hinsichtlich der Auswaschung des Filterkuchens. Daneben kann die gesamte Membran 4 gezielt auf die unterschiedlichen Aufgaben, Abdichtung der Filterplatte 9 und Membranplatte 11 gegeneinander, sowie Expansion zur Kompression des gebildeten Filterkuchens ausgelegt werden. Eine entsprechende einspannbare Membran kann auch einfach in bereits bestehende Systeme nachgerüstet werden, sowie im Vergleich zu verschweißten Membranen schneller, sowie kostengünstiger ausgetauscht werden.

Nachfolgend wird ein Ausführungsbeispiel des erfindungsgemäßen Verfahrens unter Bezugnahme der Figuren 1 bis 3, 5 und 12 näher erläutert.

Figur 5 zeigt beispielsweise zwei Filterkammern vor dem Befüllen, wobei beispielsweise in dem Aufblasraum 5 und in den Unfiltraträumen 2 Normaldruck herrscht, so dass die Membranen 4 sich im Wesentlichen vertikal erstrecken.

Vor dem Befüllen der Unfiltraträume 2 mit Unfiltrat wird Aufblasmedium über den Einlass 12 für Aufblasmedien in den Aufblasraum 5 eingeleitet. Dazu kann ein entsprechendes Stellglied 14 von der Steuereinrichtung 13 angesteuert werden, damit sich ein bestimmter Druck in dem Aufblasraum 5 einstellt. Wie bereits beschrieben, kann ein entsprechender Druck oder ein sprechendes Druckprofil beim Befüllen, oder entsprechende Parameter über eine Eingabeeinrichtung 15 eingegeben werden, oder ein entsprechendes Druckprofil ist in der Steuereinrichtung 13 abgelegt und kann über die Eingabeeinrichtung 15 gewählt werden, oder wird automatisch eingestellt.

Dabei wird die jeweilige Membran 4 der Filterkammern 1 mindestens so weit vom Aufblasraum 5 nach außen bewegt, dass das Volumen des Unfiltratraums 2 um mindestens 30 Prozent verkleinert wird, im Vergleich zu einem Zustand, bei dem im Aufblasraum 5 und im Unfiltratraum 2 Normaldruck herrscht, d.h. die Membran 4 im Wesentlichen vertikal verläuft, wie in Figur 5 dargestellt ist.

Die Membran 4 kann vorteilhafterweise bereits vor dem Befüllen entsprechend aufgeblasen werden oder aber auch noch zu Beginn des Befüllens, d.h. wenn z.B. weniger als 40% des Unfiltrats in den jeweiligen Unfiltraträumen eingelagert wurden, spätestens bis das Unfiltrat vom Befüllkanal 7 in den Unfiltratraum 2 eindringt.

Wie aus Figur 1 hervorgeht, ergibt sich aufgrund des verringerten Volumens des Aufblasraums 5 eine erhöhte Geschwindigkeit des Unfiltrats. Wenn der Unfiltratraum 2 mit aufgeblasener Membran 4 ein bestimmtes Befüllvolumen erreicht hat und z.B. bis bis oben befüllt ist, kann die mindestens eine Membran 4 wieder in Richtung Mitte des Aufblasraums 5 zurückbewegt werden, derart dass sich das Volumen des Unfiltratsraums 2 während der Befüllung vergrößert. Dazu wird der Druck im Aufblasraum 5 entsprechend reduziert, indem ein Aufblasmedium, wie beispielsweise Gas, insbesondere Luft, oder eine Flüssigkeit wie z.B. Wasser aus dem Aufblasraum 5 über den Auslass 12 abgelassen wird, wie durch den Pfeil P1 dargestellt ist.

Dabei wird der Druck während des Befüllens im Wesentlichen derart in dem Aufblasraum 5 eingestellt, dass der Druck im Unfiltratraum 2 im Wesentlichen konstant gehalten wird, das heißt, dass zur gezielten Steuerung des Maßes der Membranrelaxation die Befüllung idealerweise durch Gegendrucksteuerung erfolgt. Das bedeutet, dass das Unfiltrat, gegen einen konstanten Gegendruck in die Unfiltraträume 2 eingeleitet wird. Somit kann eine dynamische Anpassung des Unfiltratvolumens erfolgen. Das Druckprofil während des Befüllen kann zum Beispiel vorab in Abhängigkeit der Befüllmenge pro Zeit, der baulichen Abmessungen und Materialeigenschaften der Membran berechnet werden. Es ist auch möglich, den Druck im Unfiltratraum 2 während des Befüllen zu messen und den Druck in dem Aufblasraum 5 entsprechend zu regeln.

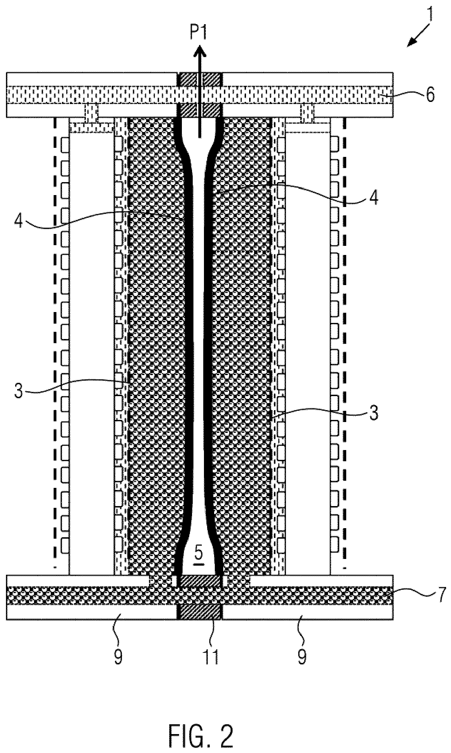

Figur 2 entspricht der Figur 1, wobei hier bereits mehr Unfiltrat in den Unfiltratraum 2 eingeleitet wurde und bereits Filtrat über den Filtratablauf 6 abläuft, wobei sich der Unfiltratraum 2 bereits durch die Bewegung der Membran 4 vergrößert hat. Die Membran 4 bewegt sich so lange zurück, bis ein vorbestimmtes maximales Unfiltratraumvolumen erreicht ist.

Über die Bewegung der Membranen 4 kann also auch das Volumen des Unfiltratraums 2, d.h. das maximale bzw. minimale Volumen eingestellt werden. Zur maximalen Vergrößerung des Unfiltratraums kann beispielsweise auch ein Unterdruck im Aufblasraum 5 angelegt werden.

Wenn gemäß einem bevorzugten Ausführungsbeispiel die Membran 4, wie in Zusammenhang mit der Figur 4 beschrieben wurde, ausgebildet ist, ergibt sich eine im Wesentlichen konstante Breite des Unfiltratraums 2 im Bereich, der dem inneren Bereich B entspricht. Dies ist vorteilhaft für eine gleichmäßige Einlagerung in den Unfiltratraum 2 und sorgt für eine gleichmäßige Kompression beim Auspressen des Filterkuchens.

Nach der erfindungsgemäßen strömungsoptimierten Befüllung der Kammern 1, erfolgt idealerweise die Verpressung des Kuchens und das anschließende Einleiten von Wasser zur Auslaugung des Filterkuchens. Beim Verpressen wird wieder Aufblasmedium in den Aufblasraum 5 geleitet, damit sich die Membran 4, hier die beiden Membranen 4 aus dem Aufblasraum 5 nach außen, sprich in Richtung der Unfiltraträume bewegen. Dieser Vorgang kann bei Bedarf mehrfach wiederholt werden, bevor eine Entleerung der Filterkammern 1 entweder durch Auseinanderfahren der Platten 1 oder durch Öffnen einer nicht dargestellten Bodenöffnung erfolgt. Vorteilhaft ist, dass der Gegendruck im Aufblasraum 5 bei der Befüllung des Unfiltratraums 2 den Druck im Aufblasraum 5 beim Verpressen nicht überschreitet.

Wie aus Figur 3 erkennbar ist, ermöglicht das erfindungsgemäße Verfahren eine homogene Beladung aller Kammern des Plattenfilters. Sedimentationen können wirksam vermieden werden.

Um eine gleichmäßige Einlagerung des zu filtrierenden Gemischs in allen Kammern des Filters zu gewährleisten kann ein gemeinsamer Gegendruck, idealerweise ein Überdruck von z.B. 0,1 bis 1bar in der oder den Filtratablaufleitungen eingestellt werden. Dies kann z.B. über eine Spunddruckregulierung eines Ausgleichsbehälters einfach reguliert werden.

Das erfindungsgemäße Verfahren ist nicht auf den zuvor beschriebenen Plattenfilter 10 beschränkt, sondern ist gleichermaßen für alle Plattenfilter, insbesondere Maischefilter geeignet, die mindestens eine aufblasbare Membran 4 pro Filterkammer 1 verwenden. So ist das erfindungsgemäße Verfahren auch geeignet, wenn die Kammern 1 zwei Membranen 4 aufweisen, die Unfiltraträume nach unten hin über eine Bodenöffnung geöffnet werden können und/ oder der Filter kontinuierlich oder batchweise betrieben wird. Wenn auch nicht in den Figuren dargestellt ist, ist es auch möglich, dass alternativ oder zusätzlich die strukturierte Oberfläche 8 als aufblasbare Membran 4 ausgebildet ist, die über einen alternativen oder zusätzlichen Aufblasraum 5 aufblasbar ist und die die oben genannten Funktionen und Eigenschaften aufweist.

## Patentansprüche

1. Verfahren zur Befüllung von Plattenfiltern (10), insbesondere Maischefiltern für die Bierherstellung, mit mehreren in Längsrichtung L nebeneinander angeordneten Filterkammern (1) mit jeweiligen Unfiltraträumen (2), die an zumindest einer Seite von einer flexiblen, aufblasbaren Membran (4) begrenzt werden, **dadurch gekennzeichnet, dass**
während der Befüllung des Unfiltratraums (2) die mindestens eine Membran (4) derart bewegt wird, dass sich das Volumen des Unfiltratraums (2) bei der Befüllung vergrößert.

2. Verfahren nach Anspruch 1, **dadurch gekennzeichnet, dass** vor oder am Anfang der Befüllung die Membran (4) aufgeblasen wird, so dass sie sich in den Unfiltratraum (2) hinein erstreckt.

3. Verfahren nach Anspruch 1 oder 2, **dadurch gekennzeichnet, dass** die Membran (4) aufgeblasen wird, indem ein Aufblasmedium in einen Aufblasraum (5) geleitet wird und während der Befüllung Aufblasmedium aus dem Aufblasraum (5) abgelassen wird, um vorzugsweise den Druck im Unfiltratraum (2) im Wesentlichen konstant zu halten.

4. Verfahren nach mindestens einem der Ansprüche 1 bis 3, **dadurch gekennzeichnet, dass** bevor bei der Befüllung der Unfiltratraum durch Bewegung der Membran vergrößert wird, durch Aufblasen der Membran (4) das Volumen des Unfiltratraums (2) um mindestens 30 % verkleinert wird, im Vergleich zu einem Zustand, bei dem im Aufblasraum (5) und im Unfiltratraum (2) Normaldruck herrscht, derart, dass sich die Einströmgeschwindigkeit des Unfiltrats im Vergleich zu einer unaufgeblasenen Membran (4) erhöht.

5. Verfahren nach mindestens einem der Ansprüche 1 bis 4, **dadurch gekennzeichnet, dass** das Füllvolumen im Unfiltratraum (2) durch Bewegung der Membran (4) in den Unfiltratraum (2) hinein oder aus dem Unfiltratraum (2) hinaus eingestellt wird.

6. Verfahren nach mindestens einem der Ansprüche 1 bis 5, **dadurch gekennzeichnet, dass** nach vollständiger Befüllung des Unfiltratraums (2), die mindestens eine aufblasbare Membran (4) erneut aufgeblasen wird und das Unfiltrat verpresst wird, und vorzugsweise der Druck im Aufblasraum (5) beim Verpressen größer ist als der Druck im Aufblasraum (5) während des Befüllens, wobei vorzugsweise anschließend Wasser zur Auslaugung eingeleitet wird.

7. Verfahren nach mindestens einem der Ansprüche 1 bis 6, **dadurch gekennzeichnet, dass** zur Vergrößerung des Unfiltratraums (2) ein Unterdruck im Aufblasraum (5) angelegt wird.

8. Plattenfilter (10) zum Durchführen des Verfahrens nach mindestens einem der Ansprüche 1 bis 7, mit mehreren in Längsrichtung L nebeneinander angeordneten Filterkammern (1) mit jeweiligen Unfiltraträumen (2), die an zumindest einer Seite von einer flexiblen, aufblasbaren Membran (4) begrenzt werden, **dadurch gekennzeichnet, dass** der Plattenfilter (10) eine Steuereinrichtung (13) aufweist, die während der Befüllung des Unfiltratraums (2) mit Unfiltrat den Druck in einem Aufblasraum (5) derart einstellt, dass sich das Volumen des Unfiltratraums (2) bei der Füllung zumindest zeitweise vergrößert.

9. Plattenfilter (10) nach Anspruch 8, **dadurch gekennzeichnet, dass** die mindestens eine Membran (4) derart ausgebildet ist, dass sie den Unfiltratraum (2) im aufgeblasenen Zustand um mindestens 30 Prozent verkleinern kann im Vergleich zu einem Zustand, bei dem im Aufblasraum (5) und im Unfiltratraum (2) Normaldruck herrscht.

10. Plattenfilter (10) insbesondere nach mindestens einem der Ansprüche 8 bis 9, **dadurch gekennzeichnet, dass** die mindestens eine Membran (4) einen äußeren Bereich (A), der einen inneren Bereich (B) umgibt aufweist, wobei der äußere Bereich (A) beim Aufblasen einen kleineren Biegeradius aufweist als der innere Bereich (B).

11. Plattenfilter (10) nach Anspruch 10, **dadurch gekennzeichnet, dass** der innere Bereich (B) eine größere Härte aufweist als der äußere Bereich (A).

12. Plattenfilter (10) nach mindestens einem der Ansprüche 10 oder 11, **dadurch gekennzeichnet, dass** die Fläche des äußeren Bereichs (A). 10 bis 30 Prozent der Fläche des inneren Bereichs (B) entspricht, wobei der innere Bereich (B) vorteilhafterweise mindestens so groß ist, dass er die gesamte freie Filterfläche des Filterelements (3) abdeckt.

13. Plattenfilter (10) nach mindestens einem der Ansprüche 10 bis 12, **dadurch gekennzeichnet, dass** der äußere Bereich (A) ein im Wesentlichen ringförmig geschlossener Bereich ist.

14. Membran (4) für einen Plattenfilter (10), insbesondere nach einem der Ansprüche 10 bis 13, **dadurch gekennzeichnet, dass** die mindestens eine Membran (4) einen äußeren Bereich (A), der einen inneren Bereich (B) umgibt aufweist, wobei der äußere Bereich (A) beim Aufblasen einen kleineren Biegeradius aufweist als der innere Bereich.
